# EUROPÄISCHE PATENTANMELDUNG

(11) **EP 2 426 007 A2**
(43) Veröffentlichungstag der Anmeldung: **07.03.2012**
(21) Anmeldenummer: 11180279.9
(22) Anmeldetag: 06.09.2011
(51) Int. Cl.: B60L 11/18, H02J 7/00

(54) **Anordnung zum Laden eines Elektrofahrzeugs und Betriebsverfahren hierfür**

(30) Priorität: 07.09.2010 DE 102010044576; 19.04.2011 DE 102011007697
(71) Anmelder: Elektro-Bauelemente GmbH, 44536 Lünen (DE)
(72) Erfinder: Kachouh, Checrallah, 44227 Dortmund (DE)
(74) Vertreter: Ostermann, Thomas

(57) **Zusammenfassung**

Die Erfindung betrifft eine Anordnung zum Laden eines elektrisch betreibbaren Fahrzeugs mit elektrischer Energie umfassend eine die elektrische Energie bereitstellende Ladestation mit einem Steckelement, welches mit einer elektrischen Versorgungsleitung verbunden ist und über ein Gegensteckelement mit einem Energiespeicher des Fahrzeugs verbindbar ist, und einen Stellplatz zum Abstellen des Fahrzeugs während des Ladens des Energiespeichers, wobei der Ladestation eine Detektoreinheit zugeordnet ist zur Erfassung eines Belegungszustands des Stellplatzes.

## Beschreibung

Die Erfindung betrifft eine Anordnung zum Laden eines elektrisch betreibbaren Fahrzeugs mit elektrischer Energie umfassend eine die elektrische Energie bereitstellende Ladestation mit einem Steckelement, welches mit einer elektrischen Versorgungsleitung verbunden ist und über ein Gegensteckelement mit einem Energiespeicher des Fahrzeugs verbindbar ist, und einen Stellplatz zum Abstellen des Fahrzeugs während des Ladens des Energiespeichers.

Ferner betrifft die Erfindung ein Betriebsverfahren für eine Anordnung zum Laden eines elektrisch betreibbaren Fahrzeugs mit elektrischer Energie.

Aus der nachveröffentlichten DE 10 2011 007 690.5 ist bekannt, dass ein Nutzer einer Ladestation vor dem Laden eine Höchstgrenze für die Kosten des Ladevorgangs vorgibt. Der Nutzer erhält so die volle Kostenkontrolle. In Kenntnis der maximalen Kosten kann unter Berücksichtigung relevanter Betriebsparameter, insbesondere unter Berücksichtigung von Spannung und Ladestrom, wird eine die zu der Kostengrenze korrespondierende maximale Dauer des Ladevorgangs bestimmt. Mit Beginn des Ladevorgangs ist dann auch dessen Endzeit bekannt. Überdies ist bekannt, dass der Nutzer die Ladestation reservieren kann, sofern die Ladestation aktuell oder zu dem voraussichtlichen Ankunftszeitpunkt nicht belegt, das heißt für den Nutzer verfügbar ist. Zur Durchführung der Reservierung sendet der Nutzer eine Reservierungsanfragenachricht mit seiner Nutzerkennung, einer die Ladestation eindeutig identifizierenden Ladestationenkennung sowie Angaben zur maximalen Ladegebühr an eine der Ladestation zugeordnete Serviceeinheit. Die Serviceeinheit sendet daraufhin eine Sperrnachricht an die ausgewählte Ladestation. Eine Anzeigeeinheit der ausgewählten Ladestation macht den Reservierungsstatus kenntlich. Dem Nutzer kann für das Reservierungszeitintervall zwischen der Reservierung der Ladestation und dem Beginn des Ladevorgangs eine Parkgebühr bzw. eine Reservierungsgebühr berechnet werden.

Aufgabe der Erfindung ist es, eine Anordnung vorzuschlagen, mit der die Verfügbarkeit eines reservierten Stellplatzes verbessert wird, und den Reservierungsvorgang kundenfreundlicher zu gestalten.

Zur Lösung der Aufgabe ist die Erfindung in Verbindung mit dem Oberbegriff des Patentanspruchs 1 dadurch gekennzeichnet, dass der Ladestation eine Detektoreinheit zugeordnet ist zur Erfassung eines Belegungszustands des Stellplatzes.

Der besondere Vorteil der Erfindung besteht darin, dass die Reservierungsanfragenachricht in Kenntnis des korrekten Belegungszustands von Stellplatz und Ladestation fehlerfrei beantwortet werden kann. Ein die Ladestation reservierender Nutzer ist demzufolge besser davor geschützt, dass der der Ladestation zugeordnete Stellplatz belegt ist. Der Betreiber der Ladestation hingegen kann einer Reservierung mit einem hohen Maß an Verbindlichkeit entsprechen, wenn der Belegungszustand zum Zeitpunkt der Reservierung korrekt bekannt ist. Beispielsweise kann der Belegungszustand der Ladestation in einem Navigationsgerät, einem digitalen Routenplaner oder einem anderen Informationsdienst korrekt angezeigt werden. Überdies kann die Detektoreinheit genutzt werden, um die Verfügbarkeit des Stellplatzes beim Erreichen der Reservierungsstartzeit zu überwachen. Ist der Stellplatz frei und verspätet sich der Nutzer, können diesem Kosten für den freigehaltenen, aber nicht genutzten Stellplatz berechnet werden. Überdies lässt sich prüfen, ob Ansprüche des Nutzers berechtigt sind, wenn der reservierte Stellplatz nach Aussage des ersten Nutzers zum Reservierungsstartzeitpunkt nicht frei war und der Nutzer demzufolge gehindert war, sein Fahrzeug zu laden.

Die Detektoreinheit kann beispielsweise einen optischen Sensor, insbesondere einen Bild gebenden Sensor, oder einen anderen berührungslos arbeitenden Sensor, insbesondere einen Ultraschallsensor, aufweisen. Mittels dieses Sensors kann der der Ladestation zugeordneter Stellplatz überwacht und ein - mitunter unberechtigt - parkendes Fahrzeug erkannt werden. Beispielsweise kann mittels des Bild gebenden Sensors ein Kfz-Kennzeichen des Fahrzeugs ermittelt und der Nutzer automatisiert identifiziert werden. Die Detektoreinheit kann überdies so ausgeführt sein, dass sie über Auswerteschaltungen ein mechanisch bzw. elektrisch mit der Ladestation verbundenes Fahrzeug erkennt. Beispielsweise kann die Detektoreinheit eine Datenkommunikation zwischen Elektrofahrzeug und Ladestation erkennen und hieraus auf die Anwesenheit des Fahrzeugs schließen. Beispielsweise kann einem Steckelement (Steckdose) der Ladestation ein Sensor zugeordnet sein, der ein an das Steckelement angesetztes und dem Fahrzeug zugeordnetes Gegensteckelement erkennt.

Die Detektoreinheit kann als eigenständige, beispielsweise frei stehende Baueinheit realisiert sein. Ebenfalls kann die Detektoreinheit in einem Gehäuse der Ladestation integriert oder einer anderen Funktionskomponenten der Anordnung zugeordnet sein. Die Detektoreinheit muss nicht als separate Baugruppe ausgebildet sein. Sie kann funktional beispielsweise in die Ladestation integriert sein und unter Nutzung ohnehin vorhandener Komponenten als rein funktionale Detektoreinheit ausgebildet sein. Dies ist beispielsweise der Fall, wenn ein ohnehin vorhandener, dem Steckelement der Ladestation zugeordneter Kontaktschalter zur Detektion des an das Steckelement angesetzten Gegensteckelements mit der zentralen Steuereinheit der Ladestation zusammenwirkt zur Detektion des Belegungszustandes des Stellplatzes.

Nach einer bevorzugten Ausführungsform der Erfindung ist dem Stellplatz eine mechanische Sperrvorrichtung zugeordnet, die derart ausgestaltet ist, dass das Fahrzeug in einer Sperrstellung der Sperrvorrichtung am Befahren des Stellplatzes gehindert ist und dass das Fahrzeug in einer Freigabestellung der Sperrvorrichtung auf dem Stellplatz abgestellt werden kann. Vorteilhaft kann durch das Vorsehen der Sperrvorrichtung ein Unberechtigter am Befahren des Stellplatzes gehindert werden. Das Fahrzeug wird - im Sinne der Erfindung - am Befahren des Stellplatzes gehindert, wenn der Stellplatz durch die Sperrvorrichtung vollständig versperrt ist und ein Befahren zuverlässig verhindert wird oder wenn die Sperrvorrichtung ein Hindernis bildet, welches das Befahren des Stellplatzes behindert, jedoch grundsätzlich auch umfahrbar ist. Beispielsweise kann die Sperrvorrichtung so ausgebildet sein, dass ein PKW den Stellplatz nicht befahren kann, während die Sperrvorrichtung ein Motorrad beim Befahren des Stellplatzes lediglich behindert.

Nach einer Weiterbildung der Erfindung weist die mechanische Sperrvorrichtung ein Sperrelement auf, welches in der Freigabestellung zumindest abschnittsweise versenkt und/oder Boden nah angeordnet ist und welches in der Sperrstellung derart vom Boden abragt, dass es von dem Fahrzeug nicht überfahrbar ist. Vorteilhaft bietet die mechanische Sperrvorrichtung mit dem in der Sperrstellung vom Boden abragenden Sperrelement einen guten und zuverlässigen Schutz gegen unberechtigtes Befahren des Stellplatzes. Beispielsweise kann das Sperrelement aufgerichtet werden, wenn der Stellplatz frei ist und die Ladestation reserviert wird. Erreicht der Nutzer dann die reservierte Ladestation, kann das Sperrelement in die Freigabestellung verbracht werden. Hierdurch ist weitgehend gewährleistet, dass eine reservierte Ladestation und der zugehörige Stellplatz dem berechtigten Nutzer bei dessen Ankunft zur Verfügung stehen und von nicht vom Unberechtigten belegt wird.

Nach einer Weiterbildung der Erfindung ist eine mit der Detektoreinheit und der Sperrvorrichtung zusammenwirkende Steuereinheit vorgesehen, die derart ausgeführt ist, dass die Sperrvorrichtung nur dann in die Sperrstellung verbracht wird, wenn kein Fahrzeug auf dem Stellplatz abgestellt ist. Vorteilhaft wird verhindert, dass ein berechtigt oder unberechtigt auf dem Stellplatz geparktes Fahrzeug beim Aktivieren der Sperrvorrichtung, das heißt beim Verbringen derselben von der Freigabestellung in die Sperrstellung beschädigt wird oder am Wegfahren gehindert ist. Die Steuereinheit kann beispielsweise die zentrale der Steuereinheit der Ladestation sein.

Nach einer Weiterbildung der Erfindung ist eine Indikatoreinheit vorgesehen zur Kenntlichmachung einer Nichtverfügbarkeit der betriebsbereiten Ladestation. Nachdem eine Reservierungsbestätigungsnachricht an den Nutzer gesendet wurde, kann eine an sich betriebsbereite Ladestation für andere Nutzer gesperrt werden. Beispielsweise kann die Ladestation während des gesamten Reservierungszeitintervalls vom Senden der Reservierungsbestätigungsnachricht bis zur Reservierungsstartzeit gesperrt sein. Beispielsweise kann die Ladestation rechtzeitig vor Erreichen der Reservierungsstartzeit gesperrt werden.

Die Nichtverfügbarkeit der Ladestation kann beispielsweise auf einem Display oder mittels einer Leuchtanzeige an der Ladestation selbst angezeigt werden. Ebenfalls ist möglich, die Nichtverfügbarkeit der Ladestation in interaktiven Medien, beispielsweise einem Internet gestützten Routenplaner oder einem Navigationssystem, zu hinterlegen und kenntlich zu machen. Beispielsweise kann die in die Sperrstellung verbrachte Sperrvorrichtung zugleich die Nichtverfügbarkeit der Ladestation kenntlich machen und insofern als Indikatoreinheit dienen. Die Indikatoreinheit kann beispielsweise genutzt werden, um bei einer reservierten Ladestation die freie Zeit bis zur Sperrung der Ladestation anzuzeigen, oder um den Startzeitpunkt und/oder den voraussichtlichen Endzeitpunkt eines aktuell durchgeführten Ladevorgangs anzuzeigen.

Nach einer Weiterbildung der Erfindung sind der Detektoreinheit zugeordnete Justagemittel vorgesehen. Die Justagemittel bieten die Möglichkeit, die Detektoreinheit in Bezug zu dem der Ladestation zugeordneten Stellplatz auszurichten. Die Ladestation kann durch das Vorsehen der Justagemittel in besonders einfacher Weise an die örtlichen Gegebenheiten angepasst werden. Als Justagemittel können beispielsweise verstellbare mechanische Befestigungsmittel vorgesehen sein. Beispielsweise können die Justagemittel - etwa bei der Verwendung Bild gebender Sensoren oder Ultraschallsensoren- softwareseitig zur Verfügung gestellt werden.

Zur Lösung der Aufgabe weist die Erfindung die Merkmale des Patentanspruchs 6 auf.

Der besondere Vorteil der Erfindung besteht darin, dass der die Ladestation reservierende erste Nutzer in einem interaktiven Prozess kurzfristig eine zuverlässige Antwort auf seine Reservierungsanfragenachricht erhält. Er weiß demzufolge bereits nach kurzer Zeit, ob seiner Reservierungsanfrage entsprochen wurde und die Ladestation für ihn verfügbar ist. Sofern die Reservierung nicht bestätigt wird, kann er sich frühzeitig um Alternativen kümmern. Die Reservierungsstartzeit gibt hierbei den Zeitpunkt an, ab dem der erste Nutzer die Ladestation erreicht bzw. nutzen will. Die Verfügbarkeit der Ladestation wird hierbei von der Serviceeinheit überprüft bzw. festgestellt. Die Serviceeinheit kann in räumlicher Nähe zu der Ladestation angeordnet, insbesondere in der Ladestation integriert sein. Ebenso können Ladestation und Serviceeinheit räumlich getrennt voneinander sein und kabelgebunden bzw. drahtlos miteinander kommunizieren. Die Serviceeinheit kann als eine zentrale Serviceeinheit ausgebildet sein und mit einer Mehrzahl von Ladestationen zusammenwirken.

Zur Prüfung, ob eine gegenwärtig von einem zweiten Nutzer genutzte Ladestation zu der Reservierungsstartzeit voraussichtlich frei sein wird, werden die Reservierungsstartzeit und die voraussichtliche Endzeit des gegenwärtigen Ladevorgangs verglichen. Die gegenwärtige Endzeit ist beispielsweise bekannt, wenn der zweite Nutzer die Dauer des Ladevorgangs bzw. dessen Endzeit explizit spezifiziert hat oder wenn die Endzeit aus einer Angabe zu einer maximalen Ladegebühr oder zu einer in den Energiespeicher des Fahrzeugs des zweiten Nutzers einzuspeisenden Energiemenge bestimmt werden kann.

Die Nichtverfügbarkeit der Ladestation muss nicht unmittelbar nach Versenden der Reservierungsbestätigungsnachricht an den ersten Nutzer angezeigt werden. Beispielsweise kann eine Ladestation für den kommenden Tag reserviert werden. Die Nichtverfügbarkeit dieser Ladestation kann dann in zeitlicher Nähe zu der spezifizierten Reservierungsstartzeit, beispielsweise drei oder sechs Stunden vor der Reservierungsstartzeit, an der Ladestation kenntlich gemacht werden.

Beispielsweise wird die Reservierung der Ladestation im Voraus zu zahlen sein. Beispielsweise kann die Zahlung über ein Mobilfunkkonto, eine Kreditkarte oder ein Kundenkarte des ersten Nutzers erfolgen. Kosten können für die Zeit des Ladevorgangs selbst erhoben werden. Überdies können für die Reservierung und Freihaltung der Ladestation unabhängig von dem Ladervorgang weitere Kosten berechnet werden. Weiterhin ist denkbar, zu den Gebühren für die Nutzung der Ladestation Parkgebühren für den Stellplatz zu erheben.

Nach einer bevorzugten Ausführungsform der Erfindung sendet der erste Nutzer mit der Reservierungsanfragenachricht eine persönliche Nutzerkennung bzw. eine Ladevorgangskennung zur Spezifizierung der Dauer des Ladevorgangs, einer voraussichtlichen Endzeit desselben, einer maximalen Ladegebühr oder einer in den Energiespeicher des Fahrzeugs des Nutzers einzuspeisenden Energiemenge an die Serviceeinheit. Vorteilhaft kann der Nutzer über die Nutzerkennung eindeutig identifiziert werden, so dass sich die Abrechnung des Ladevorgangs besonders einfach gestaltet. Über die Ladevorgangskennung kann eine Endzeit des Ladevorgangs des ersten Nutzers bestimmt werden, so dass nachfolgende Reservierungsanfragen besonders schnell und effizient beantwortet werden können.

Nach einer Weiterbildung der Erfindung wird ein Sperrelement einer mechanischen Sperrvorrichtung der Anordnung betätigt und derart in Position gebracht, dass das Fahrzeug am Befahren des Stellplatzes gehindert wird, sofern der Stellplatz frei ist und ein Zeitintervall bis zum Beginn der Reservierungsstartzeit ein Grenzzeitintervall unterschreitet. Vorteilhaft kann mithilfe des mechanischen Sperrelements eine Belegung des Stellplatzes in einem vordefinierten Zeitintervall vor Beginn der Reservierungsstartzeit verhindert werden. Auf diese Weise kann die Verfügbarkeit des Stellplatzes und der Ladestation für den ersten Nutzer gewährleistet werden. Das Grenzzeitintervall kann individuell gewählt werden und insbesondere auf die durchschnittliche Dauer eines Ladevorgangs abgestimmt sein. Beispielsweise kann das Grenzzeitintervall auf dem Parkplatz eines Einkaufszentrums zu drei Stunden gewählt werden, wenn bekannt ist, dass 90% oder mehr aller Parkplätze nach weniger als drei Stunden freigegeben werden. Beispielsweise kann das Grenzzeitintervall einer Ladestation, die bevorzugt von Über-Nacht-Parkern genutzt wird, auf zwölf oder mehr Stunden festgelegt werden. Ziel ist es hierbei, den ersten Nutzer die reservierte Ladestation mit einer großen Sicherheit bereitstellen zu können und gleichzeitig Sorge dafür zu tragen, dass die Ladestation nicht unnötig früh für andere Nutzer blockiert wird und dem Betreiber der Ladestation Umsatz entgeht.

Nach einer Weiterbildung der Erfindung wird an einen in die Ladestation beim Eingang der Reservierungsanfragenachricht verwendeten zweiten Nutzer eine Verlängerungsanfragenachricht gesendet mit der Option, die Nutzungsdauer über die ursprünglich spezifizierte Endzeit hinaus zu verlängern. Einer Reservierungsanfragenachricht des ersten Nutzers wird nicht vorbehaltlos zugestimmt. Vielmehr genießt der die Ladestation gegenwärtig nutzende zweite Nutzer eine Priorität, die es ihm erlaubt, die Dauer des Ladevorgangs bzw. die Parkdauer auf dem Stellplatz zu verlängern. Hierdurch wird verhindert, dass der die Ladestation aktuell nutzende zweite Nutzer anlässlich der Reservierungsanfragenachricht des ersten Nutzers gezwungen wird, sein Fahrzeug umzuparken. Sofern der zweite Nutzer den Ladevorgang über die in der Reservierungsanfragenachricht des ersten Nutzers spezifizierte Reservierungsstartzeit hinaus verlängert, ist die Ladestation für den ersten Nutzer nicht verfügbar und eine Reservierungsabfragenachricht wird an den ersten Nutzer gesendet. Der zweite Nutzer kann demzufolge bei kurzfristig auftretender, nicht geplanter Verzögerung den Stellplatz weiter nutzen.

Nach einer Weiterbildung der Erfindung wird an den die Ladestation aktuell nutzenden zweiten Nutzer eine Aufforderungsnachricht zur Freigabe des Stellplatzes gesendet, wenn die Verlängerungsanfragenachricht dem zweiten Nutzer erfolgreich gesendet wurde und der zweite Nutzer nicht oder nicht rechtzeitig geantwortet hat oder mit einer von ihm an die Serviceeinheit gesendeten Verlängerungsabsagenachricht eine Verlängerung abgelehnt hat. Beispielsweise kann vorgesehen sein, dass der zweite Nutzer drei oder fünf Minuten Zeit hat, um auf die Verlängerungsanfragenachricht hin die Verlängerungsbestätigungsnachricht an die Serviceeinheit zurückzusenden. Tut er dies nicht, endet sein Ladevorgang zu der ursprünglich von ihm selbst spezifizierten Endzeit. Vorteilhaft erhält der zweite Nutzer durch die Aufforderungsnachricht verbindliche Kenntnis von dem Wunsch nach einer zukünftigen Belegung des aktuell von ihm genutzten Stellplatzes. Er ist rechtzeitig aufgefordert, den Stellplatz freizugeben. Ist der zweite Nutzer nicht erreichbar, kann zugunsten des zweiten Nutzers vom Versenden der Aufforderungsnachricht abgesehen werden. Eine Nichterreichbarkeit ist beispielsweise gegeben, wenn die Aufforderungsnachricht an ein Mobiltelefon des zweiten Nutzers gesendet wird und der zweite Nutzer sich in einem Funkloch befindet.

Nach einer Weiterbildung der Erfindung wird eine Ankunftsnachricht an die Serviceeinheit gesendet, sobald der erste Nutzer den Stellplatz erreicht. Vorteilhaft kann eine etwaige Sperrvorrichtung deaktiviert werden zur Freigabe des Stellplatzes. Die Ankunftsnachricht kann von dem ersten Nutzer beispielsweise aktiv via Mobiltelefon oder nach Authentifizierung durch die Betätigung einer an der Ladestation vorgesehen Aktivierungstaste erfolgen. Ebenfalls kann die Ankunftsnachricht passiv generiert werden. Beispielsweise kann eine Detektoreinheit das Kfz-Kennzeichen des ersten Nutzers erfassen und darauf aufbauend die Ankunftsnachricht selbsttätig erzeugen.

Nach einer Weiterbildung der Erfindung wird beim Erreichen der Reservierungsstartzeit mittels einer Detektoreinheit ein Belegungszustand des Stellplatzes geprüft, sofern die Ladestation die Ankunft des ersten Nutzers noch nicht erkannt hat. Vorteilhaft kann mittels der Detektoreinheit festgestellt werden, ob der Stellplatz im Reservierungsstartzeitpunkt frei war und demzufolge vom ersten Nutzer hätte genutzt werden können. Ist dies der Fall, können dem ersten Nutzer Kosten für den reservierten, aber nicht rechtzeitig in Anspruch genommenen Stellplatz berechnet werden. Wird mittels der Detektoreinheit jedoch festgestellt, dass der Stellplatz belegt ist, ohne dass der erste Nutzer die Ladestation wie gewünscht nutzt, kann darauf geschlossen werden, dass der Stellplatz vom vorherigen Nutzer nicht rechtzeitig geräumt wurde oder dass ein anderer Nutzer den Stellplatz unberechtigt belegt.

Nach einer Weiterbildung der Erfindung wird von der Serviceeinheit eine Nichtfreigabenachricht an einen Dritten gesendet, wenn der Stellplatz beim Erreichen und/oder nach Überschreiten der Endzeit vom zweiten Nutzer nicht freigegeben wird. Vorteilhaft kann das unberechtigte Parken und die damit verbundene Blockade der Ladestation beispielsweise als Ordnungswidrigkeit geahndet werden. Die entsprechende Nichtfreigabenachricht kann als eine Ahndungsnachricht beispielsweise unmittelbar nach Erreichen der Endzeit an eine Ordnungsinstitution oder an die Polizei versendet werden. Bevorzugt wird die Ahndungsnachricht nach einem zusätzliche Karenzzeitintervall versendet, innerhalb dessen der zweite Nutzer sein Fahrzeug von dem Stellplatz zu entfernen hat. Die Ahndungsnachricht kann ohne persönliche bzw. fahrzeugbezogene Daten des zweiten Nutzers gesendet werden.

Nach einer Weiterbildung der Erfindung wird von der Serviceeinheit nach dem Versenden einer Reservierungsbestätigungsnachricht an den ersten Nutzer eine Annullierungsnachricht gesendet, wenn der Stellplatz beim Erreichen und/oder nach Überschreiten der Sperrzeit nicht freigegeben ist. Vorteilhaft erfährt der erste Nutzer frühzeitig, wenn die reservierte Ladestation wider Erwarten nicht bereitgestellt werden kann. Der Nutzer hat dann die Möglichkeit, eine alternative Ladestation zu identifizieren und anzufahren. Über die alternative Ladestation kann der erste Nutzer beispielsweise in der Annullierungsnachricht informiert werden. Beispielsweise kann der erste Nutzer zur Reservierung der alternativen Ladestation auf die Annullierungsnachricht antworten. Ebenfalls ist möglich, dass der erste Nutzer mit der Annullierungsnachricht über die bereits durchgeführte Reservierung der alternativen Ladestation informiert wird. Sofern der erste Nutzer einen Stellplatz reserviert hat, der zur Reservierungsstartzeit nicht frei ist, kann dem ersten Nutzer eine Nutzungsgebühr (insb. Reservierungs- oder Parkgebühr) vollständig oder teilweise erlassen oder gutgeschrieben werden. Eine teilweise Gutschrift kommt insbesondere dann in Frage, wenn der erste Nutzer die Ladestation trotz der verzögerten Bereitstellung später noch nutzt. Eine komplette Gutschrift kommt beispielsweise dann in Frage, wenn der erste Nutzer die Ladestation aufgrund der verspäteten Bereitstellung gar nicht mehr nutzt.

Die Erfindung wird nachfolgend anhand von Zeichnungen näher erläutert.

Es zeigen:
- Figur 1: eine schematische Darstellung einer erfindungsgemäßen Anordnung,
- Figur 2: den Verfahrensablauf eines ersten erfindungsgemäßen Verfahrens und Figur 3 einen Verfahrensablauf eines zweiten erfindungsgemäßen Verfahrens.

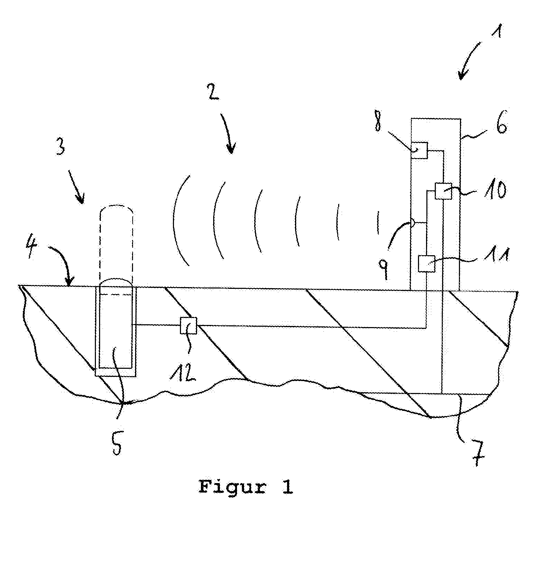

Eine Anordnung zum Laden eines elektrisch betreibbaren Fahrzeugs mit elektrischer Energie nach Figur 1 umfasst als wesentliche Komponenten eine Ladestation 1, einen der Ladestation 1 räumlich zugeordneten Stellplatz 2 zum Abstellen des Elektrofahrzeugs während des Ladens sowie eine Sperrvorrichtung 3 mit einem in einem Boden 4 versenkbaren Sperrelement 5. Das Sperrelement 5 ist als eine Pilone 5 ausgebildet.

Die Ladestation 1 ist als eine Boden stehende Ladesäule ausgeführt mit einem Gehäuse 6, mit einem in dem Gehäuse 6 angeordneten und an eine Versorgungsleitung 7 angeschlossenen Steckelement 8, mit einer Detektoreinheit 9, mit einer dem Steckelement 8 zugeordneten Schalteinheit 10 zum Schalten des Steckelements 8 und mit einer Steuereinheit 11. Die Steuereinheit 11 wirkt zusammen mit der Detektoreinheit 9 und der Schalteinheit 10. Ferner wirkt die Steuereinheit 11 zusammen mit einer Betätigungseinheit 12 der Sperrvorrichtung 3. Die Betätigungseinheit 12 der Sperrvorrichtung 3 dient dazu, das Sperrelement 5 aus einer Freigabestellung, in der das Sperrelement 5 versenkt im Boden 4 angeordnet ist und ein Fahrzeug auf dem Stellplatz 2 abgestellt werden kann, in eine Sperrstellung zu verbringen, in der das Sperrelement 5 aus dem Boden 4 ragt und Fahrzeuge am Befahren des Stellplatzes 2 hindert.

Die Detektoreinheit 9, welche in dem Gehäuse 6 dem Stellplatz 2 zugewandt angeordnet ist, weist einen berührungslos arbeitenden, nicht dargestellten Sensor zur Überwachung des Belegungszustands des Stellplatzes 2 auf. Mithilfe der Detektoreinheit 9 kann festgestellt werden, ob ein Fahrzeug auf dem Stellplatz 2 abgestellt ist oder ob der Stellplatz 2 frei ist. Der Sensor ist beispielsweise als ein optischer Sensor, insbesondere als ein Bild gebender Sensor ausgebildet. Die Sensorsignale werden entweder lokal in der Detektoreinheit 9 oder in der Steuereinheit 11 ausgewertet. Die Betätigungseinheit 12 wird von der Steuereinheit 11 derart angesteuert, dass das Sperrelement 5 nur dann aus der Freigabestellung in die Sperrstellung verbracht wird, wenn der Stellplatz 2 nicht belegt ist.

Durch die Pilone 5 kann weitgehend sichergestellt werden, dass keine Fahrzeuge unberechtigt auf dem Stellplatz 2 abgestellt werden. Die erfindungsgemäße Anordnung ist demzufolge vorteilhaft verwendbar, wenn die Ladestation 1 bzw. der Stellplatz 2 von einem Nutzer reserviert wird. Beispielsweise kann ein erster Nutzer zur Reservierung der Ladestation 1 eine Reservierungsanfragenachricht an eine der Ladestation 1 zugeordnete Serviceeinheit senden. Mit der Reservierungsanfragenachricht wird eine Identifikationsnummer der Ladestation 1 sowie eine Reservierungsstartzeit übermittelt. Die Reservierungsstartzeit definiert den Zeitpunkt, an dem der erste Nutzer die Ladestation 1 voraussichtlich erreicht und den Ladevorgang beginnt. Sofern die Ladestation 1 gegenwärtig nicht genutzt wird, nicht bereits anderweitig reserviert ist und die Reservierungsstartzeit innerhalb eines Sperrzeitintervalls liegt, wird die Ladestation 1 unmittelbar für andere Nutzer gesperrt. Zudem erhält der erste Nutzer eine Reservierungsbestätigungsnachricht von der Serviceeinheit, und die Nichtverfügbarkeit der Ladestation 1 wird kenntlich gemacht. Zur Kenntlichmachung kann beispielsweise die Pilone 5 aus der Freigabestellung in die Sperrstellung verbracht werden. Alternativ oder zusätzlich kann die Sperrung auch an der Ladestation 1 selbst angezeigt und in einem interaktiven Medium, beispielsweise im Internet oder einem mit Navigationsgeräten zusammenwirkenden Verkehrsdatendienst kenntlich gemacht werden.

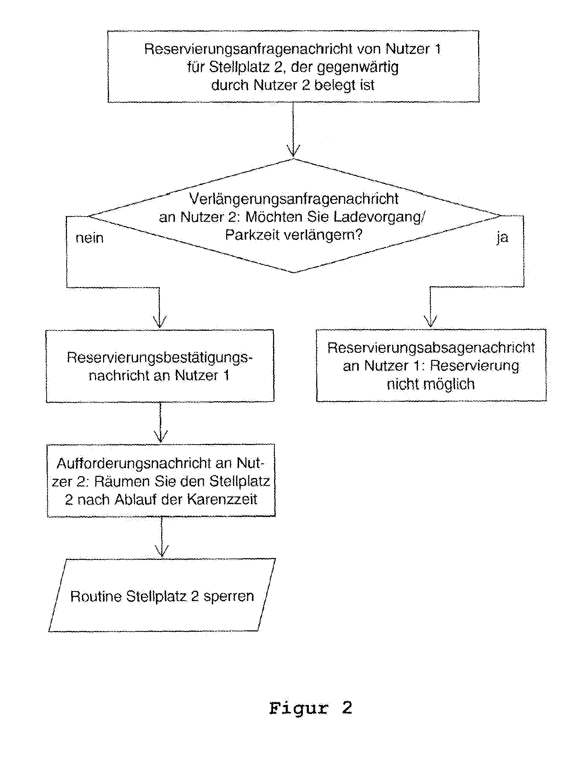

Figur 2 zeigt den Verfahrensablauf, wenn der erste Nutzer eine Reservierungsanfragenachricht für eine von einem zweiten Nutzer gegenwärtig genutzte Ladestation 1 an die Serviceeinheit sendet. Aufgrund der Nutzerkennung und einer die Dauer bzw. die Endzeit des Ladevorgangs bzw. die maximale Ladegebühr oder die in den Energiespeicher des Fahrzeugs einzuspeisende Energiemenge spezifizierende Ladevorgangskennung sind die Kontakt- bzw. Kommunikationsdaten des zweiten Nutzers sowie die Endzeit des Ladevorgangs bekannt. In diesem Fall wird von der Serviceeinheit eine Verlängerungsanfragenachricht an den zweiten Nutzer gesendet. Der zweite Nutzer erhält hierbei die Möglichkeit, seinem Ladevorgang bzw. die Parkdauer über die ursprünglich spezifizierte Endzeit hinaus zu verlängern. Antwortet der zweite Nutzer auf die Verlängerungsanfragenachricht mit einer Verlängerungsbestätigungsnachricht, wird der Ladevorgang bzw. die Parkdauer des zweiten Nutzers verlängert. In diesem Fall erhält der erste Nutzer auf seine Reservierungsanfragenachricht hin eine Reservierungsabsagenachricht. Eine Reservierungsabsagenachricht kann an dem ersten Nutzer ebenfalls gesendet werden, wenn dem zweiten Nutzer eine Verlängerungsanfragenachricht nicht übersandt werden kann. Dies kann beispielsweise der Fall sein, wenn Kommunikationsdaten des zweiten Nutzers nicht bekannt sind oder der zweite Nutzer vorübergehend nicht erreichbar ist, sich beispielsweise in einem Funkloch befindet oder sein Mobiltelefon ausgeschaltet ist.

Beantwortet der zweite Nutzer die Verlängerungsanfragenachricht nicht oder nicht rechtzeitig, das heißt innerhalb einer vordefinierten Antwortzeit, oder lehnt der zweite Nutzer eine Verlängerung ab, indem er an die Serviceeinheit eine Verlängerungsabsagenachricht sendet, wird eine Reservierungsbestätigungsnachricht an den ersten Nutzer gesendet. Wird zudem eine Aufforderungsnachricht an den zweiten Nutzer gesendet, den Stellplatz 2 nach Beendigung des Ladevorgangs, spätestens jedoch nach dem Ablauf einer zusätzlichen Karenzzeit von z. B. 15 oder 30 Minuten freizugeben.

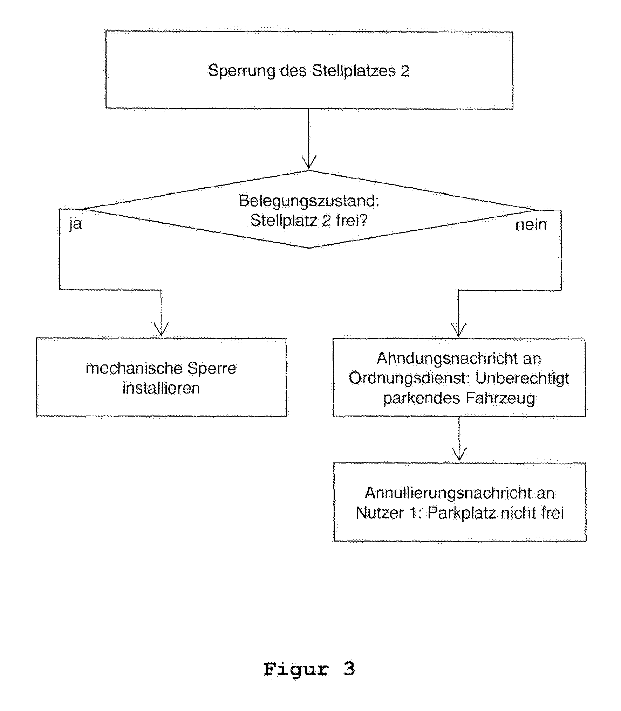

Figur 3 zeigt die Betriebsroutine zum Sperren des Stellplatzes 2, auf dem kein Fahrzeug abgestellt sein sollte. Der Stellplatz 2 wird gesperrt, indem die Pilone 5 aus der Freigabestellung in die Sperrstellung verbracht wird. Hierbei wird zunächst mittels der Detektoreinheit 9 festgestellt, ob ein Fahrzeug auf dem Stellplatz 2 abgestellt ist. Ist dies der Fall, wird die Pilone 5 in die Sperrstellung verbracht und der Stellplatz 2 mechanisch gesperrt. Ist der Stellplatz 2 jedoch wider Erwarten belegt, wird eine Ahndungsnachricht an eine Ordnungsinstitution, beispielsweise an die Polizei gesendet. Mit der Ahndungsnachricht erhält die Ordnungsinstitution Kenntnis davon, dass ein Fahrzeug unberechtigt auf dem Stellplatz 2 abgestellt ist. Die Ordnungsinstitution kann entsprechende Maßnahmen ergreifen, beispielsweise eine schriftliche Verwarnung aussprechen oder das Fahrzeug abschleppen lassen. Überdies wird eine Annullierungsnachricht an den ersten Nutzer gesendet, mit der dieser darüber in Kenntnis gesetzt, dass der Stellplatz 2 zum Reservierungsstartzeitpunkt voraussichtlich nicht frei sein wird und die Reservierung deswegen aufgehoben werden muss.

Als Fahrzeuge im Sinne der Erfindung gelten alle Automobile (PKW, LKW, Wohnmobile, Zweiräder usw.), Schienenfahrzeuge (insbesondere Lokomotiven), Wasserfahrzeuge (Schiffe), Luftfahrzeuge sowie Anhänger (Wohnanhänger, mobile Verkaufsstände usw.).

## Patentansprüche

1. Anordnung zum Laden eines elektrisch betreibbaren Fahrzeugs mit elektrischer Energie umfassend eine die elektrische Energie bereitstellende Ladestation mit einem Steckelement, welches mit einer elektrischen Versorgungsleitung verbunden ist und über ein Gegensteckelement mit einem Energiespeicher des Fahrzeugs verbindbar ist, und einen Stellplatz zum Abstellen des Fahrzeugs während des Ladens des Energiespeichers, **dadurch gekennzeichnet, dass** der Ladestation (1) eine Detektoreinheit (9) zugeordnet ist zur Erfassung eines Belegungszustands des Stellplatzes (2).

2. Anordnung nach Anspruch 1, **dadurch gekennzeichnet, dass** dem Stellplatz (2) eine mechanische Sperrvorrichtung (3) zugeordnet ist, die derart ausgestaltet ist, dass das Fahrzeug in einer Sperrstellung der Sperrvorrichtung (3) am Befahren des Stellplatzes (2) gehindert ist und dass das Fahrzeug in einer Freigabestellung der Sperrvorrichtung (3) auf den Stellplatz (2) abgestellt werden kann.

3. Anordnung nach Anspruch 1 oder 2, **dadurch gekennzeichnet, dass** die mechanische Sperrvorrichtung (3) ein Sperrelement (5) aufweist, welches in der Freigabestellung zumindest abschnittsweise im Boden (4) versenkt und/oder bodennah angeordnet ist und welches in der Sperrstellung derart vom Boden (4) abragt, dass es mit dem Fahrzeug nicht überfahrbar ist.

4. Anordnung nach einem der Ansprüche 1 bis 3, **dadurch gekennzeichnet, dass** eine mit der Detektoreinheit (9) und der Sperrvorrichtung (3) zusammenwirkende Steuereinheit (11) vorgesehen ist, die derart ausgebildet ist, dass die Sperrvorrichtung (3) nur dann in die Sperrstellung verbringbar ist, wenn der Stellplatz (2) nicht belegt ist.

5. Anordnung nach einem der Ansprüche 1 bis 4, **dadurch gekennzeichnet, dass** eine Indikatoreinheit vorgesehen ist zur Kenntlichmachung einer Nichtverfügbarkeit der betriebsbereiten Ladestation (1).

6. Anordnung nach einem der Ansprüche 1 bis 5, **dadurch gekennzeichnet, dass** Justagemittel vorgesehen sind zur Ausrichtung der Detektoreinheit (9) in Bezug zum Stellplatz (2).

7. Betriebsverfahren für eine Anordnung zum Laden eines elektrisch betreibbaren Fahrzeugs mit Energie, insbesondere eine Anordnung nach einem der Ansprüche 1 bis 6, wobei die Anordnung wenigstens eine Ladestation zur Bereitstellung elektrischer Energie und einen Stellplatz zum Abstellen des Fahrzeugs aufweist, umfassend die folgenden Schritte:'
- ein erster Nutzer sendet eine Reservierungsanfragenachricht an eine der Ladestation zugeordnete Serviceeinheit mit einer Identifikationsnummer zum Identifizieren der Ladestation und mit einer Reservierungsstartzeit,
- wenn die Ladestation zu der Reservierungsstartzeit voraussichtlich verfügbar sein wird, erhält der erste Nutzer eine Reservierungsbestätigungsnachricht, und die Nichtverfügbarkeit der Ladestation wird kenntlich gemacht,
- wenn die Ladestation zu der Reservierungsstartzeit voraussichtlich nicht verfügbar ist, erhält der Nutzer eine Reservierungsabsagenachricht.

8. Verfahren nach Anspruch 7, **dadurch gekennzeichnet, dass** der erste Nutzer mit der Reservierungsanfragenachricht eine Nutzerkennung und/oder eine Ladevorgangskennung zur Spezifikation einer Dauer des Ladevorgangs oder einer maximalen Ladegebühr oder einer in einem Energiespeicher des Fahrzeugs einzuspeisenden Energiemenge oder einer Endzeit des Ladevorgangs an die Serviceeinheit sendet.

9. Verfahren nach Anspruch 7 oder 8, **dadurch gekennzeichnet, dass** ein beweglich angeordnetes Sperrelement (5) einer mechanischen Sperrvorrichtung (3) der Anordnung derart positioniert wird, dass das Fahrzeug am Befahren des Stellplatzes (2) gehindert wird, sofern der Stellplatz (2) frei ist und ein Zeitintervall bis zum Beginn der Reservierungsstartzeit ein Grenzzeitintervall unterschreitet.

10. Verfahren nach einem der Ansprüche 7 bis 9, **dadurch gekennzeichnet, dass** an einen die Ladestation (1) beim Eingang der Reservierungsanfragenachricht verwendenden zweiten Nutzer eine Verlängerungsanfragenachricht versendet wird mit der Option, durch Senden einer Verlängerungsbestätigungsnachricht an die Serviceeinheit die Nutzungszeitdauer über eine ursprünglich spezifizierte Endzeit hinaus zu verlängern.

11. Verfahren nach einem der Ansprüche 7 bis 10, **dadurch gekennzeichnet, dass** an den ersten Nutzer die Reservierungsbestätigungsnachricht und/oder an den zweiten Nutzer eine Aufforderungsnachricht zur Freigabe des Stellplatzes (2) gesendet wird, sofern die Verlängerungsanfragenachricht an den zweiten Nutzer erfolgreich gesendet wurde und der zweite Nutzer nicht oder nicht rechtzeitig geantwortet hat oder mit einer von ihm an die Serviceeinheit gesendeten Verlängerungsabsagenachricht eine Verlängerung abgelehnt hat.

12. Verfahren nach einem der Ansprüche 7 bis 11, **dadurch gekennzeichnet, dass** eine Ankunftsnachricht an die Serviceeinheit gesendet wird, sobald der erste Nutzer den Stellplatz (2) erreicht.

13. Verfahren nach einem der Ansprüche 7 bis 12, **dadurch gekennzeichnet, dass** beim und/oder ab dem Erreichen der Reservierungsstartzeit mit einer Detektoreinheit (9) der Anordnung ein Belegungszustand des Stellplatzes (2) geprüft wird, sofern die Ladestation (1) die Ankunft des ersten Nutzers noch nicht registriert hat.

14. Verfahren nach einem der Ansprüche 7 bis 13, **dadurch gekennzeichnet, dass** von der Serviceeinheit eine Nichtfreigabenachricht an einen Dritten gesendet wird, wenn der Stellplatz (2) beim Erreichen und/oder nach Überschreiten der von dem Nutzer spezifizierten Endzeit nicht freigegeben ist.

15. Verfahren nach einem der Ansprüche 7 bis 14, **dadurch gekennzeichnet, dass** nach dem Versenden der Reservierungsbestätigungsnachricht an dem ersten Nutzer eine Annullierungsnachricht an den ersten Nutzer gesendet wird, wenn der Stellplatz (2) bei Erreichen und/oder nach Überschreiten einer Sperrzeit nicht freigegeben ist.
